# FASCICULE DE BREVET EUROPEEN

(11) **EP 1 209 341 B1**
(45) Date de publication et mention de la délivrance du brevet: **11.01.2006**
(21) Numéro de dépôt: 01403004.3
(22) Date de dépôt: 23.11.2001
(51) Int. Cl.: F02D 41/06, F01L 9/04

(54) **Procédé de commande d'un moteur à combustion en vue d'optimiser le démarrage**
Verfahren zur Steuerung eines Verbrennungsmotors zur Optimierung des Starts
Method for controlling an internal combustion engine for optimising the start

(30) Priorité: 24.11.2000 FR 0015170
(43) Date de publication de la demande: 29.05.2002
(73) Titulaire: Renault s.a.s., 92100 Boulogne Billancourt (FR)
(72) Inventeur: Devanne, Nocilas, 92500 Rueil Malmaison (FR); Lesachey, Xavier, 78340 Les Clayes sous Bois (FR)

(56) Documents cités:
- DE-A- 10 009 320
- DE-C- 19 851 214
- US-A- 6 092 496
- PATENT ABSTRACTS OF JAPAN vol. 2000, no. 02, 29 février 2000 (2000-02-29) & JP 11 324744 A (FUJI HEAVY IND LTD), 26 novembre 1999 (1999-11-26)

## Description

La présente invention concerne un moteur à combustion, notamment un moteur thermique de véhicule automobile.

L'invention concerne en particulier les moteurs qui disposent d'une commande totalement indépendante des soupapes du type dit « camless ».

L'invention s'applique à un procédé de commande d'un moteur à combustion à quatre temps à injection, en vue d'optimiser la durée du démarrage et en vue d'étaler dans le temps la consommation d'énergie électrique pendant le démarrage, du type comportant deux groupes de cylindres, un vilebrequin équipé de moyens de synchronisation en vue de connaître sa position angulaire, un circuit d'admission d'air ou de mélange air/carburant et un circuit d'échappement de gaz brûlés qui communiquent avec la chambre de combustion de chaque cylindre du moteur, du type dans lequel les communications des circuits d'admission et d'échappement avec chaque chambre sont susceptibles d'être obturées chacune par au moins une soupape, respectivement d'admission et d'échappement, du type dans lequel l'ouverture et la fermeture de chaque soupape sont commandées par un actionneur linéaire électromagnétique, relié à une unité électronique de commande, du type dans lequel un piston décrit un mouvement de va-et-vient dans chaque cylindre comprenant une course descendante du piston du point mort haut vers le point mort bas et une course ascendante du piston du point mort bas vers le point mort haut, et du type comportant un démarreur alimenté en courant électrique par une batterie.

Le plus souvent, les moteurs du type « camless » comportent des soupapes qui sont commandées individuellement par des actionneurs linéaires électromagnétiques, par exemple du type décrit dans le document WO-A-96/19643.

Généralement, les actionneurs électromagnétiques de soupapes comportent deux ressorts, un ressort de soupape et un ressort d'actionneur.

Le corps de l'actionneur renferme deux électro-aimants supérieur et inférieur qui sont susceptibles d'agir sur une palette de commande qui est montée sur l'extrémité supérieure de la tige d'actionnement de la soupape.

La palette de commande vient se coller alternativement sur les électro-aimants supérieur ou inférieur lorsque l'on commande respectivement la fermeture ou l'ouverture de la soupape.

Lors de l'arrêt du moteur, les soupapes sont positionnées à mi-course pour tous les cylindres.

Ce type de moteur nécessite un démarrage différent d'un moteur pourvu d'un arbre à cames.

En effet, une soupape à commande électromagnétique a besoin de plusieurs millisecondes pour être opérationnelle car il faut la déplacer depuis sa position de repos à mi-course vers sa position fermée ou vers sa position ouverte au maximum, au cours d'une phase de prépositionnement appelée aussi phase de collage de la soupape.

Cette phase de collage de la soupape nécessite de l'énergie électrique fournie par la batterie.

Ce besoin d'énergie électrique est très supérieur aux besoins des autres consommateurs d'énergie électrique lors du démarrage du moteur, mis à part le démarreur.

De plus, la commande indépendante des soupapes permet de réaliser des séquences de démarrage que l'on ne peut pas réaliser avec un moteur à arbre à cames.

L'invention vise à pallier les contraintes des moteurs du type « camless » en optimisant la répartition dans le temps des différentes phases du démarrage du moteur, en vue d'étaler dans le temps la consommation d'énergie électrique pendant le démarrage.

L'invention vise aussi à assurer des temps de démarrage du moteur qui soient compatibles avec les besoins exprimés par les utilisateurs.

L'invention vise encore à faciliter le démarrage à chaud du moteur.

En effet, au cours d'un arrêt du moteur à chaud, les gaz brûlés contenus dans la ligne d'échappement, qui sont plus légers et plus chauds que l'air, remontent dans les canalisations du moteur, et notamment dans le circuit d'admission.

On constate souvent l'apparition de ce phénomène sur un moteur à distribution traditionnelle, c'est à dire dans lequel les soupapes sont commandées par des arbres à cames, car l'arrêt du moteur s'effectue souvent au voisinage des points morts de la course des pistons et les gaz brûlés profitent de l'ouverture simultanée des soupapes d'admission et d'échappement sur certains cylindres pour remplir toutes les tubulures d'admission du moteur.

La présence de gaz brûlés dans les circuits d'admission pénalise alors fortement le démarrage suivant du moteur puisque la combustion du carburant injecté ne trouve plus suffisamment d'oxygène pour se développer correctement.

Lors de l'arrêt d'un moteur du type « camless », les soupapes sont positionnées à mi-course pour tous les cylindres.

Par conséquent, la communication entre les tubulures d'échappement et les tubulures d'admission est encore plus directe que pour un moteur à distribution traditionnelle, ce qui amplifie le phénomène « d'envahissement » du circuit d'admission par les gaz brûlés et aggrave les dysfonctionnements lors du démarrage.

L'invention propose un procédé du type décrit précédemment, caractérisé en ce que, lorsque le démarrage du moteur a été demandé,
- pour un premier groupe de cylindres, ou cylindres primaires, on réalise successivement les opérations suivantes :
   - avant le lancement du démarreur, on commande un prépositionnement des soupapes au cours duquel on commande le déplacement de toutes les soupapes dans une position fermée ou dans une position ouverte au maximum ;
   - après le lancement du démarreur, on commande la première injection de carburant dans au moins un cylindre primaire, sans attendre la détermination de la position angulaire du vilebrequin ;
   - dès que l'on a déterminé la position angulaire du vilebrequin, on synchronise l'allumage et la position des soupapes par rapport à la position angulaire du vilebrequin en vue de fonctionner selon le cycle classique à quatre temps du moteur ;
- pour un second groupe de cylindres, ou cylindres secondaires, on réalise les opérations suivantes :
   - après le lancement du démarreur, on commande pour chaque cylindre secondaire l'un après l'autre, un prépositionnement des soupapes au cours duquel on commande le déplacement de toutes les soupapes dans une position fermée ou dans une position ouverte au maximum ;
   - pour chaque cylindre secondaire, lorsque le prépositionnement des soupapes est effectué, et lorsque l'on a déterminé la position angulaire du vilebrequin, on commande son fonctionnement selon le cycle classique.

Selon d'autres caractéristiques de l'invention :
- on commande simultanément la première injection de carburant dans tous les cylindres primaires, sans attendre la détermination de la position angulaire du vilebrequin ;
- lorsque l'on commande le prépositionnement des soupapes des cylindres primaires et secondaires, soit on ferme les soupapes d'admission et on ouvre au maximum les soupapes d'échappement, soit on ouvre au maximum les soupapes d'admission et on ferme les soupapes d'échappement ;
- en phase de démarrage du moteur à chaud, pour au moins un cylindre secondaire, après avoir commandé le prépositionnement de ses soupapes, et avant de commander son fonctionnement en mode classique, on commande son fonctionnement dans un mode dit de purge dans lequel on commande successivement :
   - au voisinage du point mort haut du piston, la fermeture des soupapes d'échappement et l'ouverture d'au moins une soupape d'admission ;
   - au voisinage du point mort bas du piston, la fermeture des soupapes d'admission et l'ouverture d'au moins une soupape d'échappement, de manière à transvaser vers le circuit d'échappement au moins une partie des gaz brûlés qui ont rempli le circuit d'admission pendant l'arrêt du moteur ;
- pour les cylindres secondaires fonctionnant en mode de purge, on commande le prépositionnement des soupapes après avoir déterminé la position angulaire du vilebrequin, et on positionne les soupapes en fonction de la position du piston dans le cylindre, de manière que le cylindre soit prêt à fonctionner en mode de purge au point mort suivant du piston ;
- en cas d'échecs successifs du démarrage, on suspend l'injection de carburant pour les cylindres ayant déjà eu une phase d'injection ;
- si l'on détecte une faible charge de la batterie avant le démarrage, on décale dans le temps le prépositionnement des soupapes de chaque cylindre primaire par rapport aux prépositionnements des autres cylindres primaires, en vue de lisser dans le temps la consommation de courant électrique nécessaire à ces prépositionnements ;
- pour chaque cylindre secondaire, on commande la première injection de carburant après le prépositionnement de ses soupapes, sans attendre d'être en phase avec le cycle classique.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en coupe d'une partie d'un moteur à combustion interne à soupapes sans arbres à cames et commandé selon un procédé conforme aux enseignements de l'invention ;
- la figure 2 est un diagramme qui illustre le fonctionnement du procédé selon l'invention dans le cas d'un démarrage favorable ;
- la figure 3 est un diagramme qui illustre le fonctionnement du procédé selon l'invention dans le cas d'un démarrage défavorable ;
- la figure 4 est un diagramme qui illustre le fonctionnement du procédé selon l'invention lorsque l'on détecte une faible charge de la batterie au démarrage ;
- la figure 5 est un diagramme qui illustre le fonctionnement d'un cylindre en mode de purge ; et
- la figure 6 est un diagramme qui illustre le fonctionnement du procédé selon l'invention en cas de démarrage à chaud.

Dans la description qui va suivre on considère à titre non limitatif que chaque cylindre possède une seule soupape d'admission et une seule soupape d'échappement commandées individuellement par des actionneurs électromagnétiques.

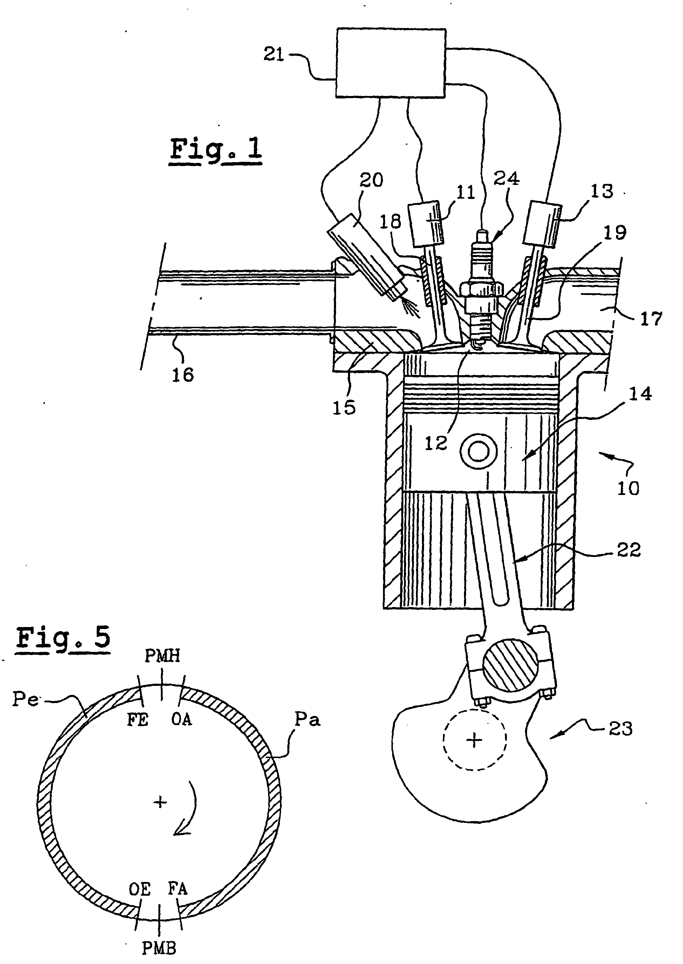

On a représenté à la figure 1 un cylindre 10 d'un moteur à combustion interne à quatre temps dont la partie supérieure forme une chambre de combustion 12 délimitée par un piston mobile 14 et par une culasse 15.

Dans la partie inférieure du cylindre, une bielle 22 relie le piston 14 à un vilebrequin 23.

Le cylindre 10 est alimenté en mélange air/carburant par un circuit d'admission 16 qui débouche dans la chambre de combustion 12 au travers d'une soupape d'admission 18 dont les déplacements sont commandés par un actionneur électromagnétique linéaire 11 afin d'obturer ou non la communication entre le circuit d'admission 16 et la chambre de combustion 12.

Un circuit d'échappement 17 est prévu pour l'évacuation des gaz brûlés hors de la chambre de combustion 12 au travers d'une soupape d'échappement 19 également commandée par un actionneur linéaire électromagnétique 13.

La commande des soupapes d'admission 18 et d'échappement 19 est assurée par une unité électronique de commande 21 qui pilote les actionneurs 11, 13.

L'unité électronique 21 commande aussi l'injection de carburant, ici indirecte, au moyen d'un injecteur 20, ainsi que l'allumage au moyen d'une bougie 24.

L'unité électronique de commande 21 comporte notamment des moyens de mémorisation d'une ou plusieurs cartographies de fonctionnement du moteur.

L'unité électronique de commande 21 reçoit des signaux représentatifs de paramètres de fonctionnement tels que le régime du moteur, la pression atmosphérique, la pression dans chaque cylindre, le débit des gaz d'admission et/ou d'échappement, le couple instantané fourni, etc.

Selon le principe du cycle à quatre temps d'un moteur à combustion, celui-ci s'effectue en deux rotations du vilebrequin 23 et en quatre courses du piston 14, les quatre temps du cycle étant l'admission, la compression, la combustion et l'échappement.

On expliquera maintenant le fonctionnement d'un mode préféré de réalisation du procédé selon l'invention appliqué, à titre d'exemple, à un moteur à quatre cylindres C1, C2, C3, C4 en ligne.

On note que, de manière classique, pour un bon équilibrage du moteur pendant son fonctionnement, les points morts PM des pistons 14 de deux cylindres 10 adjacents sont opposés.

Ainsi, lorsque le piston 14 du cylindre C1 est à son point mort haut PMH, le piston 14 du cylindre C2 est à son point mort bas PMB, le piston 14 du cylindre C3 est à son point mort haut PMH et le piston 14 du cylindre C4 est à son point mort bas PMB.

On choisit comme cylindres primaires les cylindres C1, C4 et comme cylindres secondaires les cylindres C2, C3, de manière à optimiser la répartition dans le temps les demandes d'énergie électrique provenant des cylindres C1, C2, C3, C4.

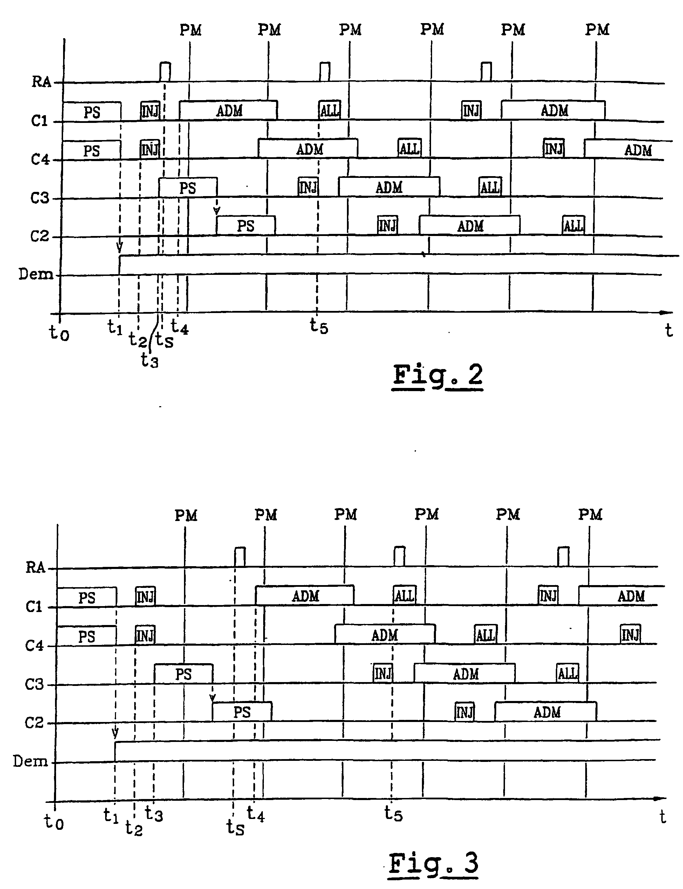

Sur les figures 2, 3, 4 et 6, les axes verticaux référencés « PM » représentent les points morts PM des pistons des cylindres C1, C2, C3, C4.

Ainsi, l'écart entre deux axes PM adjacents représente un demi-tour de vilebrequin 23.

L'axe horizontal référencé « Dem » représente le fonctionnement du démarreur.

On a représenté à la figure 2 un diagramme qui illustre le fonctionnement du procédé selon l'invention.

On commence par détecter la demande de démarrage du moteur, à l'instant t0, par exemple en détectant l'utilisation d'une clé de contact ou d'un moyen équivalent.

On commande alors simultanément un prépositionnement PS des soupapes 18, 19 des deux cylindres primaires C1, C4 en plaçant les soupapes d'admission 18 en position fermée et les soupapes d'échappement 19 en position ouverte au maximum.

Ce prépositionnement PS - soupape d'admission 18 fermée et soupape d'échappement 19 ouverte - est préférable à un prépositionnement PS dans lequel toutes les soupapes 18, 19 seraient fermées.

En effet, lorsque toutes les soupapes 18, 19 sont fermées, la rotation du vilebrequin 23, et donc le déplacement du piston 14 dans le cylindre 10, provoque une montée en pression dans le cylindre 10, pendant la course ascendante du piston 14, ce qui empêche l'ouverture des soupapes 18, 19 au voisinage du point mort haut PMH.

De préférence, on ne choisit pas un prépositionnement PS dans lequel toutes les soupapes 18, 19 sont ouvertes au maximum, car ce type de prépositionnement PS fait communiquer le circuit d'admission 16 avec le circuit d'échappement 17, ce qui produit un phénomène de « cross-flow », c'est à dire un envahissement du circuit d'admission 16 par les gaz brûlés, notamment en cas de démarrage à chaud.

Dès que le prépositionnement PS des soupapes 18, 19 des cylindres primaires C1, C4 est terminé, à l'instant t1, on lance le démarreur Dem, qui est alimenté en courant électrique par une batterie du moteur, de manière à provoquer la rotation du vilebrequin 23.

Pour démarrer dans des délais satisfaisants, on anticipe l'injection INJ de carburant dans les cylindres primaires C1, C4, à l'instant t2, sans attendre la détermination de la position angulaire du vilebrequin 23.

Cette injection INJ de carburant n'est donc pas synchronisée avec la position angulaire du vilebrequin 23.

A partir de l'instant t3 on commande, pour chaque cylindre secondaire C3, C2 l'un après l'autre, un prépositionnement PS des soupapes 18, 19, en plaçant la soupape d'admission 18 en position fermée et la soupape d'échappement 19 en position ouverte au maximum.

On commande ici le prépositionnement PS d'abord sur le cylindre C3, puis sur le cylindre C2.

Dès le début de la rotation du vilebrequin 23 sous l'action du démarreur Dem, c'est à dire à partir de l'instant t1, on cherche à identifier la position angulaire du vilebrequin 23, par exemple au moyen d'un capteur (non représenté) et d'un repère angulaire RA solidaire en rotation du vilebrequin 23.

La connaissance de la position angulaire du vilebrequin 23 permet de déterminer les points morts haut PMH et bas PMB de la course des pistons 14 de chacun des cylindres C1, C2, C3, C4, et ainsi de synchroniser les instants d'ouverture et de fermeture des soupapes 18, 19 en fonction du cycle prévu de fonctionnement.

Sur la figure 2 on détermine la position angulaire du vilebrequin 23 grâce au repère angulaire RA à l'instant ts de synchronisation S.

La détection du repère angulaire RA signifie ici que le piston 14 du cylindre C1 est dans sa course ascendante, au voisinage de son point mort haut PMH.

Dès que la synchronisation S est effectuée, on commande le déplacement des soupapes 18, 19 des cylindres ayant déjà subi leur prépositionnement PS, ici les cylindres primaires C1, C4, de manière à fonctionner selon le mode classique à quatre temps du moteur.

Comme on a déjà injecté le carburant dans le cylindre C1, on peut commencer, à l'instant t4, une phase d'admission ADM du mélange carburé dans la chambre de combustion 12 du cylindre C1, en ouvrant la soupape d'admission 18 et en fermant la soupape d'échappement 19 pendant la course descendante du piston 14.

Au voisinage du point mort haut PMH suivant du cylindre C1, à l'instant t5, on déclenche l'allumage ALL du mélange, conformément au mode classique de fonctionnement d'un cylindre.

Lorsque le piston 14 du cylindre C1 est à son premier point mort bas PMB après la synchronisation S, le piston 14 du cylindre C4 est à son point mort haut PMH, et on déclenche une phase d'admission ADM du mélange carburé dans le cylindre C4, l'injection INJ de carburant ayant été réalisée en avance, à l'instant t2.

Pour chacun des cylindres secondaires C2, C3, dès que le prépositionnement PS est effectué, on commande leur fonctionnement selon le mode classique à quatre temps, de manière synchrone vis-à-vis de la position angulaire du vilebrequin 23.

Par conséquent, pendant la phase d'admission ADM du cylindre C4, on déclenche l'injection INJ de carburant dans le cylindre C3 et, au voisinage du point mort haut PMH du piston 14 du cylindre C3, on déclenche une phase d'admission ADM.

De manière similaire, on commande l'injection INJ de carburant dans le cylindre C2 au cours de la phase d'admission ADM du cylindre C3 et on déclenche une phase d'admission ADM au voisinage du point mort haut PMH du piston 14 du cylindre C2.

Tous les cylindres C1, C2, C3, C4 fonctionnent alors selon un mode classique à quatre temps.

La phase de démarrage, qui vient d'être décrite en référence à la figure 2, constitue un cas favorable de démarrage car on a déterminé la position angulaire du vilebrequin 23 dès le premier point PM du cylindre C1 suivant le lancement du démarreur Dem.

On a représenté sur la figure 3 un cas défavorable de démarrage dans lequel l'identification de la position angulaire n'intervient qu'après environ un tour de vilebrequin 23.

Ce cas se produit lorsque le moteur s'arrête juste après que le repère angulaire RA ait dépassé le capteur associé.

Le fonctionnement du procédé est le même que pour le cas favorable mais on constate que le premier allumage ALL, celui du cylindre C1, intervient après environ deux tours et demi de vilebrequin 23.

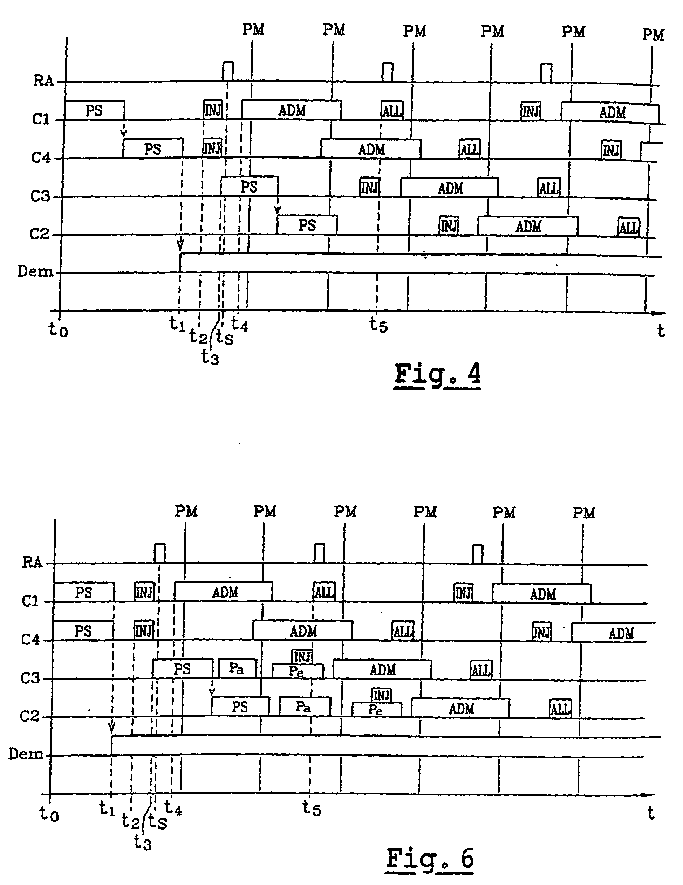

On a représenté sur la figure 4 un mode de fonctionnement du procédé lorsque l'on détecte au démarrage, à l'instant t0, une faible charge de la batterie.

Dans ce mode de fonctionnement, pour étaler dans le temps les pointes de consommation électrique dues au prépositionnement PS des soupapes 18, 19 des cylindres primaires C1, C4, on décale dans le temps le prépositionnement PS des soupapes 18, 19 du cylindre C4 par rapport au prépositionnement PS des soupapes 18, 19 du cylindre C1.

Le reste du fonctionnement est similaire à celui décrit précédemment, en référence à la figure 2.

Le procédé selon l'invention comporte aussi un mode de fonctionnement particulier en cas de démarrage à chaud.

Lorsque l'on détecte la demande de démarrage, à l'instant t0, l'unité électronique 21 détermine à partir de capteurs (non représentés) si l'on est dans un cas de démarrage à chaud.

En cas de démarrage à chaud, le fonctionnement est similaire à celui décrit précédemment, en référence à la figure 2, mais, après avoir commandé le prépositionnement PS des soupapes 18, 19 des cylindres secondaires C2, C3, et avant de commander le fonctionnement des cylindres secondaires C2, C3 en mode classique, on fait fonctionner les cylindres secondaires C2, C3 en mode de purge Mp en vue de transvaser vers le circuit d'échappement 17 au moins une partie des gaz brûlés qui ont rempli le circuit d'admission 16 pendant l'arrêt du moteur.

On note que le fonctionnement en mode de purge Mp ne peut commencer qu'après la synchronisation S, puisqu'il est nécessaire de commander le déplacement des soupapes 18, 19 en fonction des points morts haut PMH et bas PMB des pistons 14 des cylindres secondaires C2, C3.

On expliquera maintenant le fonctionnement d'un cylindre 10 dans le mode de purge Mₚ.

Le principe du fonctionnement dans le mode de purge Mₚ consiste à utiliser la rotation « à vide », donc sans injection de carburant, du vilebrequin 23, en commandant les soupapes 18, 19 du cylindre 10 de manière adéquate, pour purger le circuit d'admission 16 des gaz brûlés qu'il contient, en les évacuant vers le circuit d'échappement 17.

Le mode de purge Mp fonctionne selon un cycle à deux phases qui est illustré sur la figure 5.

Ce cycle à deux phases comprend une phase d'admission Pa des gaz brûlés lors de la course descendante du piston 14 depuis le point mort haut PMH jusqu'au point mort bas PMB.

La phase d'admission Pa est bornée par l'ouverture de la soupape d'admission 18 au voisinage du point mort haut PMH et sa fermeture au voisinage du point mort bas PMB.

Le cylindre 10 se remplit donc avec des gaz brûlés qui sont initialement contenus dans le circuit d'admission 16.

La deuxième phase est une phase d'évacuation Pe des gaz brûlés qui a lieu lors de la course ascendante du piston 14 depuis le point mort bas PMB jusqu'au point mort haut PMB.

La phase d'évacuation Pe est bornée par l'ouverture OE de la soupape d'échappement 19 au voisinage du point mort bas PMB, après la fermeture FA de la soupape d'admission 18, et la fermeture FE de la soupape d'échappement 19 au voisinage du point mort haut PMH, avant l'ouverture OA de la soupape d'admission 18.

Le cylindre 10 vidange donc les gaz brûlés qu'il contient dans le circuit d'échappement 17.

Lors du deuxième passage au point mort haut PMH, et donc après un tour complet de vilebrequin 23, on a vidangé depuis le circuit d'admission 16 vers le circuit d'échappement 17 une quantité de gaz brûlés sensiblement égale au volume du cylindre 10.

On note que le passage des points morts PMB, PMH se fait avec toutes les soupapes 18, 19 fermées de manière qu'il n'y ait jamais communication directe entre les circuits d'admission 16 et d'échappement 17.

Avantageusement, la succession des fermetures FA, FE et des ouvertures OA, OE de soupapes 18, 19 est réalisée le plus rapidement possible compte tenu des possibilités techniques du système de pilotage des soupapes 18, 19 et du système qui leur fournit l'énergie, par exemple la batterie.

On note que les passages aux points morts PMB, PMH sont détectés par des moyens connus, par exemple au moyen de cibles angulaires graduées solidaires en rotation du vilebrequin 23.

Dans le cas d'un moteur à plusieurs soupapes d'admission 18 et/ou plusieurs soupapes d'échappement 19 par cylindre 10, on peut fonctionner dans le mode de purge Mₚ en utilisant une seule soupape d'admission 18 et une seule soupape d'échappement 19, les autres soupapes restant fermées en permanence.

Ce type de fonctionnement permet notamment de diminuer la consommation d'énergie nécessaire à l'ouverture et la fermeture des soupapes 18, 19.

On peut aussi fonctionner dans le mode de purge Mp en fermant et en ouvrant simultanément toutes les soupapes d'un même type, admission ou échappement.

On a représenté sur la figure 6 un exemple de fonctionnement du procédé selon l'invention dans le cas d'un démarrage à chaud.

Lé fonctionnement est similaire à celui décrit précédemment, en référence à la figure 2, jusqu'à la synchronisation S.

Dès la synchronisation S, on commande le fonctionnement des cylindres secondaires C2, C3 ayant déjà subi le prépositionnement PS de leurs soupapes 18, 19 en mode de purge Mp.

Après son prépositionnement PS, le piston 14 du cylindre C3 est ici dans sa course descendante, par conséquent il commence son fonctionnement en mode de purge Mp par une phase d'admission Pa de gaz puis, pendant la course ascendante de son piston 14, il réalise une phase d'évacuation Pe des gaz.

Au voisinage du point mort haut PMH suivant de la course de son piston 14, le cylindre C3 commence un fonctionnement selon le mode classique à quatre temps, en phase avec les cylindres primaires C1, C4.

On note que, l'injection INJ étant ici du type indirecte, elle peut avoir lieu pendant la phase d'évacuation Pe du fonctionnement du cylindre C3 en mode de purge Mp

Avantageusement, le fonctionnement en mode de purge Mp de chaque cylindre secondaire C2, C3 comporte une seule phase d'admission Pa et une seule phase d'évacuation Pe.

On note que, pendant le fonctionnement des cylindres secondaires C2, C3 en mode de purge Mp, les cylindres primaires C1, C4 commencent leur fonctionnement selon le mode classique à quatre temps.

On remarque ici que le fonctionnement des cylindres secondaires C2, C3 en mode de purge Mp ne modifie pas la durée de la phase de démarrage du moteur, par rapport à la phase de démarrage représentée sur la figure 2.

En effet, le fonctionnement en mode de purge Mp se déroule pendant que les cylindres secondaires C2, C3 sont passifs, dans l'attente de leur première admission de mélange carburé, en phase avec les cylindres primaires C1, C4.

De préférence, lors d'un démarrage à chaud, pour les cylindres secondaires C2, C3 devant fonctionner en mode de purge Mp, si le prépositionnement PS des soupapes 18, 19 a lieu après la synchronisation S, alors on commande le prépositionnement PS des soupapes 18, 19 tel que le cylindre C2, C3 soit prêt à fonctionner en mode de purge Mp dès le point mort PM suivant de la course de son piston 14.

Avantageusement, en cas d'échecs successifs du démarrage du moteur, on suspend l'injection INJ de carburant dans les cylindres C1, C2, C3, C4 ayant déjà eu une phase d'injection INJ de carburant.

Selon une variante de réalisation de l'invention, on peut commander la première injection INJ de carburant de chaque cylindre secondaire C2, C3 sans attendre la synchronisation S, de la même manière que pour les cylindres primaires C1, C4.

## Revendications

1. Procédé de commande d'un moteur à combustion à quatre temps à injection, en vue d'optimiser la durée du démarrage et en vue d'étaler dans le temps la consommation d'énergie électrique pendant le démarrage, dans lequel l'ouverture et la fermeture de chaque soupape (18, 19) est commandée par un actionneur linéaire électromagnétique (11, 13), relié à une unité électronique de commande (21),
**caractérisé en ce que**, lorsque le démarrage du moteur a été demandé,
• pour un premier groupe de cylindres, ou cylindres primaires (C1, C4), on réalise successivement les opérations suivantes :
- avant le lancement du démarreur (Dem), on commande un prépositionnement (PS) des soupapes (18, 19) au cours duquel on commande le déplacement de toutes les soupapes (18, 19) dans une position fermée ou dans une position ouverte au maximum ;
- après le lancement du démarreur (Dem), on commande la première injection (INJ) de carburant dans au moins un cylindre primaire (C1, C4), sans attendre la détermination de la position angulaire du vilebrequin (23) ;
- dès que l'on a déterminé la position angulaire du vilebrequin (23), on synchronise l'allumage (ALL) et la position des soupapes (18, 19) par rapport à la position angulaire du vilebrequin (23) en vue de fonctionner selon le cycle classique à quatre temps du moteur ;
• pour un second groupe de cylindres, ou cylindres secondaires (C2, C3), on réalise les opérations suivantes :
- après le lancement du démarreur Dem, on commande pour chaque cylindre secondaire (C2, C3) l'un après l'autre, un prépositionnement (PS) des soupapes (18, 19) au cours duquel on commande le déplacement de toutes les soupapes (18, 19) dans une position fermée ou dans une position ouverte au maximum ;
- pour chaque cylindre secondaire (C2, C3), lorsque le prépositionnement (PS) des soupapes (18, 19) est effectué, et lorsque l'on a déterminé la position angulaire du vilebrequin (23), on commande son fonctionnement selon le cycle classique.

2. Procédé selon la revendication précédente, **caractérisé en ce que** l'on commande simultanément la première injection (INJ) de carburant dans tous les cylindres primaires (C1, C4), sans attendre la détermination de la position angulaire du vilebrequin (23).

3. Procédé selon l'une quelconque des revendications précédentes, **caractérisé en ce que**, lorsque l'on commande le prépositionnement (Ps) des soupapes (18, 19) des cylindres primaires (C1, C4) et secondaires (C2, C3), soit on ferme les soupapes d'admission (18) et on ouvre au maximum les soupapes d'échappement (19), soit on ouvre au maximum les soupapes d'admission (18) et on ferme les soupapes d'échappement (19).

4. Procédé selon la revendication précédente, **caractérisé en ce que**, en phase de démarrage du moteur à chaud, pour au moins un cylindre secondaire (C2, C3), après avoir commandé le prépositionnement (PS) de ses soupapes (18, 19), et avant de commander son fonctionnement en mode classique, on commande son fonctionnement dans un mode dit de purge (Mp) dans lequel on commande successivement :
- au voisinage du point mort haut (PMH) du piston (14), la fermeture (FE) des soupapes d'échappement (19) et l'ouverture (OA) d'au moins une soupape d'admission (18) ;
- au voisinage du point mort bas (PMB) du piston (14), la fermeture (FA) des soupapes d'admission (18) et l'ouverture d'au moins une soupape d'échappement (OE), de manière à transvaser vers le circuit d'échappement (17) au moins une partie (16) des gaz brûlés qui ont rempli le circuit d'admission (16) pendant l'arrêt du moteur.

5. Procédé selon la revendication précédente, **caractérisé en ce que**, pour les cylindres secondaires (C2, C3) fonctionnant en mode de purge (Mp), on commande le prépositionnement (PS) des soupapes (18, 19) après avoir déterminé la position angulaire du vilebrequin (23), et on positionne les soupapes (18, 19) en fonction de la position du piston (14) dans le cylindre (C2, C3), de manière que le cylindre (C2, C3) soit prêt à fonctionner en mode de purge (Mp) au point mort (PM) suivant du piston (14).

6. Procédé selon l'une quelconque des revendications précédentes, **caractérisé en ce qu'**en cas d'échecs successifs du démarrage, on suspend l'injection (INJ) de carburant pour les cylindres (C1, C2, C3, C4) ayant déjà eu une phase d'injection (INJ).

7. Procédé selon l'une quelconque des revendications précédentes, **caractérisé en ce que**, si l'on détecte une faible charge de la batterie avant le démarrage, on décale dans le temps le prépositionnement (PS) des soupapes (18, 19) de chaque cylindre primaire (C1, C4) par rapport aux prépositionnements (PS) des autres cylindres primaires (C1, C4), en vue de lisser dans le temps la consommation de courant électrique nécessaire à ces prépositionnements (PS).

8. Procédé selon l'une quelconque des revendications précédentes, **caractérisé en ce que**, pour chaque cylindre secondaire (C2, C3), on commande la première injection (INJ) de carburant après le prépositionnement (PS) de ses soupapes (18, 19), sans attendre d'être en phase avec le cycle classique.

## Patentansprüche

1. Verfahren zur Steuerung eines Verbrennungsmotors mit vier Takten zur Einspritzung im Hinblick auf ein Optimieren der Zeitdauer des Starts und im Hinblick auf ein Verteilen des Verbrauchs an elektrischer Energie während dem Start über die Zeit, bei welchem das Öffnen und das Schließen jedes Ventils (18, 19) durch ein lineares, elektromagnetisches Betätigungsglied (11, 13) gesteuert wird, das mit einer elektronischen Steuereinheit (21) verbunden ist,
**dadurch gekennzeichnet, dass**, wenn der Start des Motors nachgefragt wurde,
• man für eine erste Gruppe von Zylindern oder primären Zylindern (C1, C4) nacheinander die nachfolgenden Operationen realisiert:
- man vor dem Starten des Anlassers (Dem) eine Vorpositionierung (PS) der Ventile (18, 19) steuert, im Verlaufe derer man die Verstellung aller Ventile (18, 19) in eine geschlossene Stellung oder in eine maximal geöffnete Stellung steuert;
- man nach dem Starten des Anlassers (Dem) die erste Einspritzung (INJ) von Kraftstoff in mindestens einen primären Zylinder (C1, C4) steuert, ohne die Feststellung der Winkelposition der Kurbelwelle (23) abzuwarten;
- man, sobald man die Winkelposition der Kurbelwelle (23) festgestellt hat, die Zündung (ALL) und die Stellung der Ventile (18, 19) im Verhältnis zur Winkelposition der Kurbelwelle (23) synchronisiert im Hinblick auf ein Funktionieren gemäß dem herkömmlichen Zyklus mit vier Takten des Motors;
• man für eine zweite Gruppe von Zylindern oder sekundären Zylindern (C2, C3) die nachfolgenden Operationen realisiert:
- man nach dem Starten des Anlassers (Dem) für jeden sekundären Zylinder (C2, C3) nacheinender eine Vorpositionierung (PS) der Ventile (18, 19) steuert, in deren Verlauf man die Verstellung aller Ventile (18, 19) in eine geschlossene Stellung oder in eine maximal geöffnete Stellung steuert;
- man für jeden sekundären Zylinder (C2, C3) seinen Betrieb gemäß dem herkömmlichen Zyklus steuert, wenn die Vorpositionierung (PS) der Ventile (18, 19) ausgeführt wird und wenn man die Winkelposition der Kurbelwelle (23) festgestellt hat.

2. Verfahren nach dem vorangegangenen Anspruch, **dadurch gekennzeichnet, dass** man gleichzeitig die erste Einspritzung (INJ) von Kraftstoff in alle primären Zylinder (C1, C4) steuert, ohne die Feststellung der Winkelposition der Kurbelwelle (23) abzuwarten.

3. Verfahren nach irgendeinem der vorangegangenen Ansprüche, **dadurch gekennzeichnet, dass** man, wenn man die Vorpositionierung (PS) der Ventile (18, 19) der primären Zylinder (C1, C4) und sekundären Zylinder (C2, C3) steuert, entweder die Einlassventile (18) schließt und man die Auslassventile (19) maximal öffnet oder man die Einlassventile (18) maximal öffnet und man die Auslassventile (19) schließt.

4. Verfahren nach dem vorangegangenen Anspruch, **dadurch gekennzeichnet, dass** man in der Phase des Warmstarts des Motors für mindestens einen sekundären Zylinder (C2, C3), nachdem man die Vorpositionierung (PS) seiner Ventile (18, 19) gesteuert hat und bevor man seinen Betrieb im herkömmlichen Modus steuert, seinen Betrieb in einem als Entleerung (Mp) bezeichneten Modus steuert, in welchem man nacheinander steuert:
- in der Nähe des oberen Totpunkts (PMH) des Kolbens (14) das Schließen (FE) der Auslassventile (19) und das Öffnen (OA) von mindestens einem Einlassventil (18);
- in der Nähe des unteren Totpunkts (PMB) des Kolbens (14) das Schließen (FA) der Einlassventile (18) und das Öffnen von mindestens einem Auslassventil (OE), derart, um mindestens einen Teil (16) der verbrannten Gase, welche die Einlassleitung (16) während dem Stopp des Motors gefüllt haben, in Richtung der Auslassleitung (17) umzufüllen.

5. Verfahren nach dem vorangegangenen Anspruch, **dadurch gekennzeichnet, dass** man für die sekundären Zylinder (C2, C3), welche im Entleerungsmodus (Mp) betrieben werden, die Vorpositionierung (PS) der Ventile (18, 19) steuert, nachdem man die Winkelposition der Kurbelwelle (23) festgestellt hat und man die Ventile (18, 19) in Abhängigkeit von der Stellung des Kolbens (14) in dem Zylinder (C2, C3) derart positioniert, dass der Zylinder (C2, C3) bereit ist, im Entleerungsmodus (Mp) im nachfolgenden Totpunkt (PM) des Kolbens (14) betrieben zu werden.

6. Verfahren nach irgendeinem der vorangegangenen Ansprüche, **dadurch gekennzeichnet, dass** man im Falle von aufeinanderfolgenden Fehlschlägen des Starts die Einspritzung (INJ) von Kraftstoff für die Zylinder (C1, C2, C3, C4) unterbricht, welche schon eine Einspritzungsphase (INJ) hatten.

7. Verfahren nach irgendeinem der vorangegangenen Ansprüche, **dadurch gekennzeichnet, dass**, wenn man eine schwache Ladung der Batterie vor dem Start feststellt, man die Vorpositionierung (PS) der Ventile (18, 19) von jedem primären Zylinder (C1, C4) im Verhältnis zu den Vorpositionierungen (PS) der anderen primären Zylinder (C1, C4) in der Zeit verschiebt im Hinblick auf ein Glätten des elektrischen Stromverbrauchs über die Zeit, welcher für diese Vorpositionierungen (PS) notwendig ist.

8. Verfahren nach irgendeinem der vorangegangenen Ansprüche, **dadurch gekennzeichnet, dass** man für jeden sekundären Zylinder (C2, C3) die erste Einspritzung (INJ) von Kraftstoff nach der Vorpositionierung (PS) von ihren Ventilen (18, 19) steuert, ohne abzuwarten, dass man in Phase mit dem herkömmlichen Zyklus ist.

## Claims

1. A control method for a four-stroke injection combustion engine adapted to optimise the duration of starting and to spread electrical energy consumption over time during starting, in which the opening and closing of each valve (18, 19) is controlled by an electromagnetic linear actuator (11, 13) connected to an electronic control unit (21), **characterised in that**, when starting of the engine has been requested,
- a first group of cylinders, or primary cylinders (C1, C4), are subject to the following successive operations:
- prior to the launch of the starter (Dem), a pre-positioning (PS) of the valves (18, 19) is carried out, during which the displacement of all the valves (18, 19) into a closed position or into a position of maximum opening is carried out,
- after the launch of the starter (Dem), the first injection (INJ) of fuel into at least one primary cylinder (C1, C4) is carried out without waiting for the determination of the angular position of the crankshaft (23),
- as soon as the angular position of the cranksahft (23) has been determined, the ignition (ALL) and the position of the valves (18, 19) is synchronised with the respect to the angular position of the crankshaft (23) in order to operate according to the conventional four-stroke cycle of the engine,
- a second group of cylinders, or secondary cylinders (C2, C3), are subject to the following operations:
- after the launch of the starter (Dem), a pre-positioning of the valves (18, 19) is carried out for each secondary cylinder (C2, C3), one after the other, during which the displacement of all the valves (18, 19) into a closed position or into a position of maximum opening is carried out,
- when the pre-positioning (PS) of the valves (18, 19) has taken place, and when the angular position of the crankshaft (23) has been determined, each secondary cylinder (C2, C3) is caused to operate according to the conventional cycle.

2. A method as claimed in the preceding claim, **characterised in that** the first injection (INJ) of fuel into all the primary cylinders (C1, C4) is carried out simultaneously without waiting for the determination of the angular position of the crankshaft (23).

3. A method as claimed in any one of the preceding claims, **characterised in that** when the pre-positioning (PS) of the valves (18, 19) of the primary cylinders (C1, C4) and secondary cylinders (C2, C3) is carried out, either the intake valves (18) are closed and the exhaust valves (19) are opened to maximum, or the intake valves (18) are opened to maximum and the exhaust valves (19) are closed.

4. A method as claimed in the preceding claim, **characterised in that**, during a stage of hot starting of the engine, at least one secondary cylinder (C2, C3) is caused to operate in a so-called purge mode (Mp), after the pre-positioning (PS) of its valves (18, 19) has been carried out and before it is caused to operate in a conventional mode, in which the following are successively carried out:
- in the vicinity of the top dead centre (TDC) of the piston (14), the closure (FE) of the exhaust valves (19) and the opening (OA) of at least one intake valve (18),
- in the vicinity of the bottom dead centre (BDC) of the piston (14), the closure (FA) of the intake valves (18) and the opening of at least one exhaust valve (OE) are carried out in order to transfer to the exhaust circuit (17) at least part (16) of the combusted gases which have filled the intake circuit (16) during the stoppage of the engine.

5. A method as claimed in the preceding claim, **characterised in that**, for the secondary cylinders (C2, C3) operating in purge mode (Mp), the pre-positioning (PS) of the valves (18, 19) is carried out after the angular position of the crankshaft (23) has been determined, and the valves (18, 19) are positioned as a function of the position of the piston (14) in the cylinder (C2, C3) so that the cylinder (C2, C3) is ready to operate in purge mode (Mp) at the following dead centre (DC) of the piston (14).

6. A method as claimed in any one of the preceding claims, **characterised in that** in the event of successive starting failures, the injection (INJ) of fuel is suspended for the cylinders (C1, C2, C3, C4) which have already had an injection phase (INJ).

7. A method as claimed in any one of the preceding claims, **characterised in that**, if a low battery charge is detected prior to starting, the pre-positioning (PS) of the valves (18, 19) of each primary cylinder (C1, C4) is offset in time with respect to the pre-positionings (PS) of the other primary cylinders (C1, C4) in order to smooth, over time, the consumption of electrical current needed for these pre-positionings (PS).

8. A method as claimed in any one of the preceding claims, **characterised in that**, for each secondary cylinder (C2, C3), the first injection (INJ) of fuel is carried out after the pre-positioning (PS) of its valves (18, 19) without waiting to be in phase with the conventional cycle.
